(19)

Europäisches
Patentamt
European
Patent Office
Office européen
des brevets

(11) **EP 3 023 883 A1**

(12) **EUROPEAN PATENT APPLICATION**

(43) Date of publication:
**25.05.2016 Bulletin 2016/21**

(51) Int Cl.:
*G06F 17/18* [(2006.01)]   *G01D 4/00* [(2006.01)]
*G06Q 50/06* [(2012.01)]   *G06K 9/62* [(2006.01)]

(21) Application number: **14290352.5**

(22) Date of filing: **20.11.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Muratcan, Atalay
34776 Istanbul (TR)**
• **Tolga, Göze
34776 Istanbul (TR)**

(74) Representative: **Louis Pöhlau Lohrentz
Patentanwälte
Postfach 30 55
90014 Nürnberg (DE)**

(54) **Method of determining suspiciousness of consumer**

(57)   The invention concerns a method for determining a suspiciousness of a consumer. A consumption pattern ($p\{c,i\}(t)$) associated with said consumer of a consumer class is determined as a function of time, Then, a distance from said consumption pattern ($p\{c,i\}(t)$) to an average consumption pattern of consumers associated with said consumer class is calculated as a function of time. The calculated distance indicates the suspiciousness of said consumer. The invention concerns also a corresponding meter data management system (1), a corresponding entity (6), and a corresponding computer program product.

Fig. 3

**Description**

The present invention relates to a method, an entity, a computer program product, and a meter data management system for determining a suspiciousness of a consumer. Suspiciousness is a value enabling to detect and/or identify an anomaly.

The consumption of a consumer is generally measured by a meter. A utility provider providing resources to a consumer charges the customer after a time period according the amount measured by the meter in advance. In case that the meter is defective, i.e. measuring incorrect consumption values, the customer is possibly charged incorrectly. But it is also possible that the meter is manipulated by the customer and fraudulently used by the customer.

In order to detect such a loss, an experienced technician analyzes the meter on-site to detect a meter malfunction and/or a fraudulent usage of the meter, which takes a large amount of time and has high cost. It is also ineffective if the meter and/or the consumer site to be analyzed are chosen randomly.

Therefore, an object of the present invention is to improve the detection of such malfunction, manipulation and/or fraudulent usage.

The object of the present invention is achieved by a method of determining a suspiciousness of a consumer, wherein a consumption pattern associated with said consumer of a consumer class as a function of time is determined; and a distance from said consumption pattern to an average consumption pattern of consumers associated with said consumer class is calculated as a function of time, the calculated distance indicating the suspiciousness of said consumer. The object of the present invention is further achieved by an entity for determining a suspiciousness of a consumer, the entity comprises a control unit adapted to determine a consumption pattern associated with said consumer of a consumer class as a function of time, and calculate a distance from said consumption pattern to an average consumption pattern of consumers associated with said consumer class as a function of time, wherein the calculated distance indicates the suspiciousness of said consumer. The object of the present invention is also achieved by a computer program product storable in a memory module for determining a suspiciousness of a consumer, wherein the computer program product is adapted to be executed by a control unit such that the method according to claim 1 is performed. Furthermore, the object of the present invention is achieved by a MDM system (MDM = meter data management) for determining a suspiciousness of a consumer, comprising meters for measuring consumption data on which consumption patterns are based, a database for storing the consumption patterns, and a control unit adapted to determine a consumption pattern associated with said consumer of a consumer class as a function of time, and calculate a distance from said consumption pattern to an average consumption pattern of consumers associated with said consumer class as a function of time, wherein the calculated distance indicates the suspiciousness of said consumer.

Firstly, technical terms are defined:

A consumption pattern can be a function of time. Preferably, a consumption pattern assigns a consumption data of a consumer of a consumer class to points in time, i.e. dates. The consumption data can be measured by a meter. Preferably, a consumption pattern comprises consumption data for a predefined time period.

A suspiciousness of a consumer can be a neutral measurable value indicating a deviation or difference from an average consumption pattern. By means of the suspiciousness it is possible to quantitatively detect and/or identify a consumption pattern of a consumer of a consumer class showing an anomaly, i.e. the consumption pattern shows different trend than the average consumption pattern of said consumer class.

A consumer class can comprise one or more consumers. The consumer class can be associated with one or more consumer classes selected from the group of school, mall, office, and hospital. Different consumption patterns of the same consumer class can have a similar shape.

The terms "module", "entity" and "unit" can be used for software, e.g. a computer program product or a part of a computer program product and/or a hardware device or a part of a hardware device.

Embodiments according to the present invention can provide measuring, detecting, and/or identifying anomalies by determining a suspiciousness value.

Embodiments according to the present invention are based on "difference from the average consumption pattern", An average consumption pattern, which is a consumption profile, is calculated for each consumer class (e.g. School, Mall, Office). Then, for each consumer, a "class average" shall be scaled to meet consumer's peak and base consumptions. The difference between consumer's consumption pattern and the scaled class average consumption pattern determines the suspiciousness value.

Embodiments according to the present invention can be implemented in wide range of applications. These applications may vary from a simple command line tool to a full scale MDM system.

MDM systems can be storage and processing components of smart grid infrastructures. Data gathered from different types of smart meters and/or communication units can be validated and stored in a database management system. This type of applications can provide visualization and analysis tools for the utility company operators.

Embodiments according to the present invention provide a surprisingly effective advantageous approach - than known form the prior art - to detect a non-technical loss, like meter malfunction, fraudulent usage, - with higher true positive and lower false positive rates without the need of human examination, in case that consumption time series, i.e. consumption patterns, and consumer class are given for the consumers or preferably for each of the consumers.

Embodiments according to the present invention provide advantageously against the prior art embodiments lower error rates. Embodiments according to the present invention do advantageously not require historical data, which is not always available, as machine learning approaches require; no extra information other than consumption data and/or consumption patterns, e.g, list of hourly consumptions, and the consumer class is required. Unlike methods using supervised machine learning algorithms e.g. Artificial Neural Networks, Support Vector Machines, Random Forest, which can approximate a classifier from historical data, embodiments according to the present invention do not require historical data to be labeled e.g. as "normal" and as "fraud", which naturally results in much lower running cost than manual analysis. Therefore, embodiments according to the present invention can determine very reliably a suspiciousness of a consumer.

Embodiments according to the present invention provide advantageously against the prior art embodiments a minimalistic, easy to implement yet powerful classification.

Embodiments of the present invention avoid that an experienced technician unnecessarily analyzes the meter on-site to detect a meter malfunction, manipulation and/or a fraudulent usage of the meter, which is very time and cost ineffective if it is unknown whether or not the meter is functioning correctly. If it is unknown whether or not the meter is functioning correctly then the meter and/or the consumer has to be randomly examined on a short regular basis on-site to detect such losses promptly. This is avoided by embodiments in accordance with the present invention.

Further advantages are achieved by embodiments of the invention indicated by the dependent claims.

Preferably, the suspiciousness of a consumer is a numerical or logical value.

According to a preferred embodiment of the invention the consumer is consuming one or more resources selected from the group of electrical power resources, gas resources and water resources.

Preferably, a meter can measure consumption data periodically for a predetermined time period. The time period can have a length of 1 day to 1 month. Preferably, the time period has a length of 1 week. The meter can measure the consumption of a consumer after a predetermined time step. The predetermined time step has a time value of 1 minute to 6 hours. Preferably, the time step is 1 hour. A meter is associated with a consumer. The meter can measure consumption of one or more resources selected from the group of electrical power resources, gas resources and water resources. Consumption data, consumption patterns of a consumer can be stored by a database, wherein the consumption patterns of the consumer is also associated with a consumer class.

Methods in accordance with the present invention can be executed by an entity. The entity comprises a control unit. Therefore, it is possible that the entity is the control unit.

According to a preferred embodiment of the invention said consumption pattern is being extracted from a database holding consumption patterns. Each consumption pattern held is associated with a consumer and with a consumer class. Each consumption pattern held by a database is based on consumption data previously measured by one or more meters.

Preferably, according to a preferred embodiment of the invention the consumption patterns are held by the database. The consumption patterns are based on validated meter data. Preferably a validation module validates each consumption data prior adding consumption data to the database. Preferably, in case consumption data is not validated, the consumption data is not added to the database.

Preferably, a MDM system comprises one or more entities selected form the group of entity and/or control unit, database, validation module, user interface, and meter. It is also possible that the MDM system comprises a device which provides and/or comprises the entity and/or control unit, the database, and the user interface. It is further possible that the validation module can be comprised by said device or by one or more meters of the MDM system.

According to a preferred embodiment of the invention the average consumption pattern is calculated using the arithmetic mean of the consumption patterns held in a database and associated with consumers associated with said consumer class. For instance, an entity and/or a control unit can determine the average consumption pattern.

According to a preferred embodiment of the invention the distance from said consumption pattern to the average consumption pattern is calculated as follows: A difference from the average consumption pattern is determined by subtracting the average consumption pattern from said consumption pattern. The distance from the consumption pattern to the average consumption pattern is determined by calculating a norm along the time coordinate. Preferably, the norm is a $p$-norm, also called $L^p$-norm; preferably the norm is the $L^1$-norm or the $L^2$-norm, of the difference. Alternatively, it is possible to use the maximum-norm.

The average consumption pattern is preferably a scaled average consumption pattern. By scaling the average consumption pattern it is possible to take into account a base consumption of the consumer. This base consumption can be understood as an offset to the consumption pattern providing no trend information. Consumers of the same consumer class may show or may have a very similar consumption trend with regard their respective consumption patterns, but may have each a very different base consumption.

According to a preferred embodiment of the invention, prior calculating the distance from said consumption pattern to the average consumption pattern, the average consumption pattern is scaled resulting a scaled average consumption pattern such that the following conditions and/or constraints are met: The scaled average consumption pattern is a transformation of the average consumption pattern. Preferably, the transformation is a linear transformation. A maximum value of said consumption pattern associated with said consumer of said consumer class equals a maximum value of the scaled average consumption pattern. A minimum value of the consumption pattern associated with said consumer of said consumer class equals a minimum value of the scaled average consumption pattern.

Further, according to a preferred embodiment of the invention the distance from the consumption pattern to the average consumption pattern is calculated using the scaled average consumption pattern as follows: A difference from the scaled average consumption pattern is determined by subtracting scaled average consumption pattern from the consumption pattern. The distance from the consumption pattern to the average consumption pattern is determined by calculating a norm along the time coordinate. Preferably, the norm is a $p$-norm, also called $L^p$-norm; preferably the norm is the $L^1$-norm or the $L^2$-norm, of the difference. Alternatively, it is possible to use the maximum-norm.

Preferably, the distance from the consumption pattern to the average consumption pattern is stored in a database.

In order to classify and/or analyze the distance from the consumption pattern to the average consumption pattern, i.e. the suspiciousness, according to a preferred embodiment of the invention the distance from the consumption pattern is compared with a predetermined suspiciousness threshold value for said consumer class. Preferably, the suspiciousness threshold value for said consumer class is an empirically determined and/or constant value. For instance, the suspiciousness threshold value is a factor times the maximum suspiciousness value of each consumer of said consumer class, wherein the factor can be a value between 0,5 to 2.

According to a preferred embodiment of the invention the distance from the consumption pattern is compared with a suspiciousness threshold value for said consumer class. The suspiciousness threshold value is the arithmetic mean value of distances from the consumption patterns of each consumer and of said consumer class multiplied with a predetermined constant factor larger than 1. Preferably, the predetermined constant factor is a value selected form the interval 1.1 to 2.5.

Further, according to a preferred embodiment of the invention, in case the comparison shows that the distance from the consumption pattern is larger than the suspiciousness threshold value for said consumer class, then a value indicating that the consumption pattern of the customer is showing an anomaly is entered to a database.

According to a preferred embodiment of the invention a value indicating the result of comparison is visualized, preferably by a user interface, to an operator of a utility company providing maintaining one or more meters for measuring consumption data on which the consumption pattern of the consumer is based.

Further, according to a preferred embodiment of the invention, in case the comparison shows that the distance from the consumption pattern is larger than the suspiciousness threshold value for said consumer class, it is visually and/or audibly indicated, preferably by a user interface, that the distance exceeds the suspiciousness threshold value.

Preferably, in case the comparison shows that the distance from the consumption pattern is larger than the suspiciousness threshold value for said consumer class, a utility provider maintaining the meter can order an on-site examination for confirmation.

According to a preferred embodiment of the invention storage medium for storing the computer program product is provided.

These as well as further features and advantages of the invention will be better appreciated by reading the following detailed description of presently preferred exemplary embodiments taken with the accompanying drawings of:

Figure 1     shows a schematically sketched MDM system in accordance with the present invention.

Figure 2     shows a schematically sketched meter in accordance with the present invention.

Figure 3     shows a schematically sketched validation module in accordance with the present invention.

Figure 4     shows a schematically sketched entity in accordance with the present invention.

Figure 5     shows a schematically sketched user interface in accordance with the present invention.

Figure 6     shows a schematically sketched database in accordance with the present invention.

Figure 7     shows simplified graphs of a consumption pattern and of an average consumption pattern for illustrating concepts in accordance with the present invention.

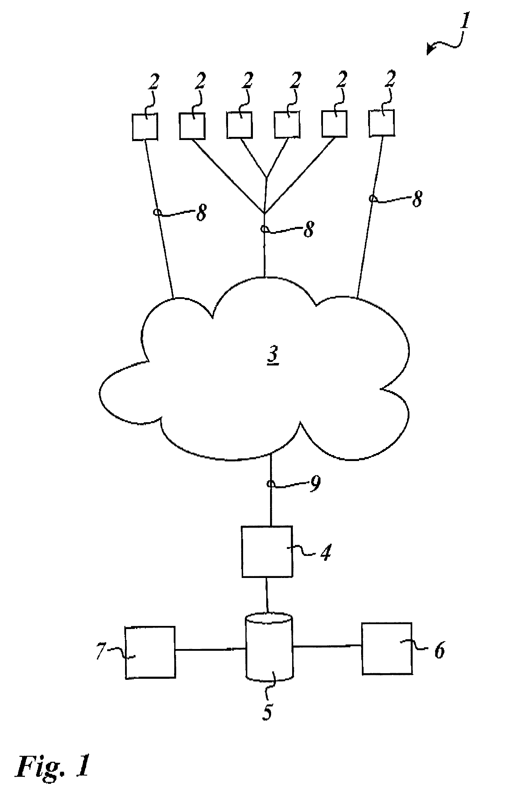

Figure 1 shows a schematically sketched MDM system 1 of an exemplary embodiment in accordance with the present invention. The MDM system 1 comprises meters 2, a validation module 4, a database 5, entity 6 and a user interface 7. The MDM system 1 comprises further communication connections 8 and 9 for enabling communication between the meters 2 and the validation module 4, preferably through the Internet 3. The communication connections 8 and 9 support one or more communication protocols and/or techniques selected from the group of GPRS (GPRS = General Packet Radio Service), UMTS (UMTS = Universal Mobile Telecommunications), DSL (DSL = Digital Subscriber Line), PLC (PLC = Power-line communication), and TCP/IP (TCP/IP = Transmission Control Protocol / Internet Protocol). The communication connections 8 and 9 support wire based and/or wireless communication techniques. The validation module 4, the database 5, the entity 6 and the user interface 7 are interconnected. It is possible that the validation module 4, the database 5, and the entity 6 are provided by one or more network nodes and/or servers (not shown in Figure 1), wherein the user interface 7 is connected to said one or more network nodes and/or servers. The validation module 4, the database 5, and the entity 6 can be provided single, partially grouped or completely grouped together by one or more software modules and/or hardware modules and/or devices,

The MDM system 1 can be part of or can provide a smart electric grid infrastructure (telemetry solutions) providing dynamic and high frequency consumption data for each consumer. This MDM system 1 can enable utility companies to thoroughly analyze consumption patterns.

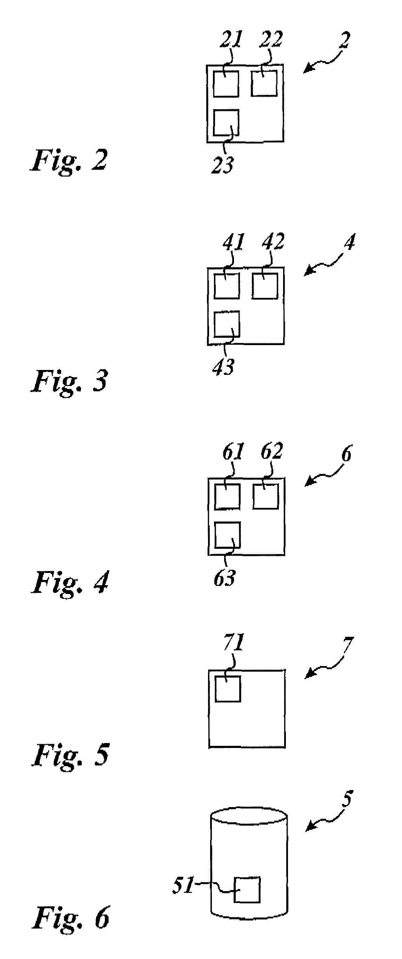

Figure 2 shows a schematically sketched meter 2 of an exemplary embodiment in accordance with the present invention. The meter 2 comprises communication interface 21, a control unit 22 and a measurement unit 23. The control unit 22 controls the communication interface 21 and the measurement unit 23 of the meter 2. The measurement unit 23 measures, preferably periodically, consumption of one or more resources selected from the group of electrical power resources, gas resources and water resources consumed by a consumer associated with a consumer class and comprises and/or is associated with the time of measurement. The communication interface 21 is adapted to transmit the consumption data measured by the measurement unit 23 to the validation module 4 via the communication connections 8 and 9. The meter 2 is assigned to a consumer of a consumer class,

Figure 3 shows a schematically sketched validation module 4 of an exemplary embodiment in accordance with the present invention. The validation module 4 communication interface 41, a control unit 42 and a memory module 43. The control unit 42 controls the communication interface 41 and the memory module 43 of the validation module 4. The validation module 4 validates each consumption data received from a meter 2 via the communication interface 41 prior adding consumption data to the database 5. Upon successful validation of the communication data the communication interface 41 of the validation module 4 sends the consumption data to the database 5 where the consumption data is added to the database 5. Term "database" - throughout the application - is used for a data base 5, i.e. a database hardware device, as well as for a database, i.e. a software implemented database. Preferably, in case consumption data is not validated, the consumption data is not added to the database 5.

For instance, the received consumption data can be validated as follows: The control unit 42 of the validation module 4 compares the received consumption data with old consumption data measured with the same meter 2 and assigned to the same consumer and same consumer class of one week ago, at the same week day and at the same daytime hour. In case the result of the comparison shows that the consumption data value and the old consumption data differ by less than a factor of e.g. 0.1 to 0.5 and/or by more than a factor of 1.5 to 5, then the consumption data is not validated. In such a case it is possible that the meter 2 did incorrectly measure the consumption. It can be also assumed that in case the consumption data measured by the meter 2 is outside of the measuring range of the meter 2, that the meter 2 did incorrectly measure the consumption; in such a case the consumption data is not validated.

Figure 4 shows a schematically sketched entity 6 of an exemplary embodiment in accordance with the present invention. The entity 6 comprises communication interface 61, a control unit 62 and a memory module. The control unit 62 controls the communication interface 61 and the memory module 63 of the meter 2. The memory module 62 can be used for temporarily storing consumption data, consumption patterns and/or calculating results during executing a method according to the present invention. The entity 6 is used for determining a suspiciousness of a consumer. The entity 6 comprises a control unit 62 adapted to determine a consumption pattern associated with said consumer of a consumer class as a function of time, and to calculate a distance from said consumption pattern to an average consumption pattern of consumers associated with said consumer class as a function of time, wherein the calculated distance indicates the suspiciousness of said consumer.

The control unit 62 of the entity 6 calculates an average consumption pattern using the arithmetic mean of the consumption patterns held in a database and associated with consumers associated with said consumer class.

Further, preferably prior calculating the distance from said consumption pattern to the average consumption pattern, the average consumption pattern is scaled in order to obtain a scaled average consumption pattern. Using a scaled average consumption pattern takes offsets in the consumption of the consumer into account such that the suspiciousness value to be determined is cleared from offsets in consumption and does quantify the trend of the consumption pattern. This additional effort is recommend in case the consumption patterns of the same consumer class do not show similar offsets in consumption. For instance, similar offsets in consumption means that the offsets of different consumers of the same consumer class differ relatively not more than 1% to 25%, preferably 2%. The term offset is used for the constant base consumption of a consumer which does not change with time.

The control unit 62 of the entity 6 scales the average consumption pattern such that the scaled average consumption pattern is a preferably linear transformation of the average consumption pattern, that a maximum value of said consumption pattern associated with said consumer of said consumer class equals a maximum value of the scaled average consumption pattern, and that a minimum value of the consumption pattern associated with said consumer of said consumer class equals a minimum value of the scaled average consumption pattern.

The following is described based on the scaled average consumption pattern, but the following can also be based on the average consumption pattern by exchanging the scaled average consumption pattern with the average consumption pattern. The control unit 62 of the entity 6 determines a difference from the scaled average consumption by subtracting scaled average consumption pattern from the consumption pattern. Then, the control unit 62 of the entity 6 determines the distance from the consumption pattern to the average consumption pattern by calculating a norm along the time coordinate, preferably the $L^1$-norm, of the difference.

This calculated distance is suspiciousness value of the consumption pattern the consumer class. Then, the control unit 62 of the entity 6 can compare this suspiciousness value of the consumption pattern with a predetermined suspiciousness threshold value for said consumer class. The suspiciousness threshold value is preferably an empirically determined and/or constant value.

Figure 5 shows a schematically sketched user interface 7 of an exemplary embodiment in accordance with the present invention. The user interface 7 comprises a communication interface 71 adapted to communicate with one or more modules of the MDM system 1, wherein the one or more modules are selected from the group of meter 2, validation module 4, entity 6, and database 5. The user interface 7 comprises preferably one or more input and/or one or more output units. The one or more input units can be selected from the group of keyboard and computer mouse. The one or more output units can be selected from the group of display device, e.g. monitor device, and an audio signal output device, e.g. a speaker. The user interface 7 is adapted to visualize a value indicating the result of the above comparison to an operator of a utility company providing maintaining one or more meters 2 for measuring consumption data on which the consumption pattern of the consumer is based. The user interface 7 can display, preferably together, one or more data selected from the group of determined suspiciousness, respective consumption pattern, the, respective scaled, average consumption pattern, and threshold value. It is possible that the user interface 7 indicates visually and/or audibly when the suspiciousness exceeds the suspiciousness threshold value.

Figure 6 shows a schematically sketched database 5 of an exemplary embodiment in accordance with the present invention. The data base 5 comprises a communication interface 51 adapted to communicate with one or more modules of the MDM system 1, wherein the one or more modules are selected from the group of meter 2, validation module 4, entity 6, and user interface 7. The database 5 stores and/or holds data, which can be consumption patterns, consumption data, data about consumers and consumer classes. Each consumption pattern stored in the database is assigned to a consumer and to the consumer class to which the consumer belongs. Consumption patterns held by a database 5 are based on consumption data previously measured by one or more meters 2. The database 5 can be accessed by the entity 6, the validation module 4 and/or the user interface 7, wherein the entity 6, the validation module 4 and/or the user interface 7 can add, remove and/or modify the data held by the database 5.

A memory module 43, 63 - as comprised by the validation module 4 and/or the entity 6 - can be a read only memory or a random access memory, harddisk device, flash memory and/or solid state memory device, e.g. a solid state harddisk.

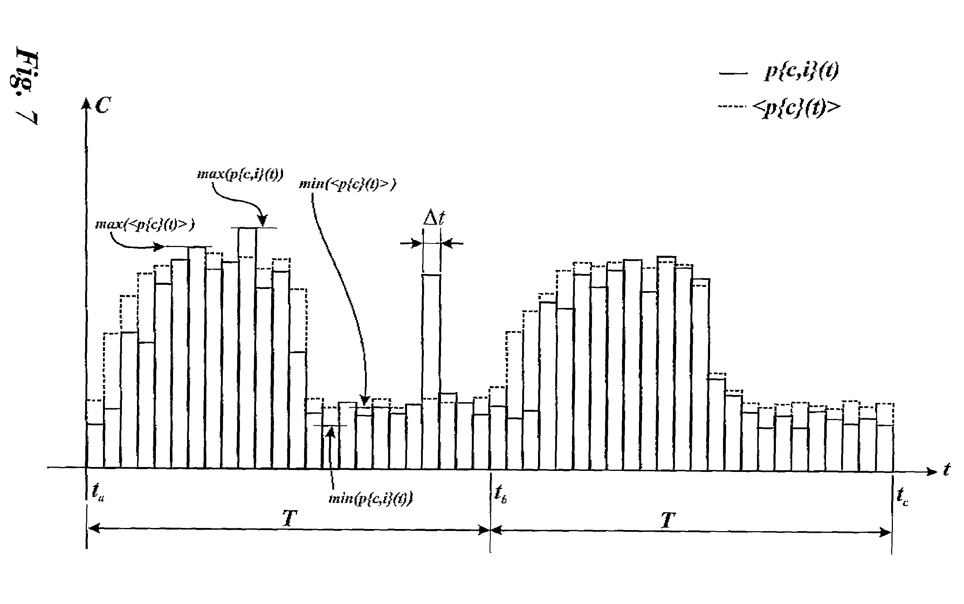

Figure 7 shows simplified graphs of a consumption pattern $p\{c,i\}(t)$ of a consumer labeled $i$ and associated with a consumer class labeled $c$ and of an average consumption pattern $<p\{c\}(t)>$ associated with the consumer class c for illustrating concepts in accordance with the present invention. The graphs shown in Figure 7 are bar graphs. These graphs can be interpolated and/or extrapolated to obtain a smooth representation, Figure 7 shows the consumption pattern $p\{c,i\}(t)$ and the average consumption pattern $<p\{c\}(t)>$ for two time periods of duration $T$. The first period starts at the time $t_\alpha$ and the second at the time $t_b$. The first period ends at the time $t_b$ and the second at the time $t_c$. The width of the bars $\Delta t$ indicates the time difference between measurements take by a meter 2 associated with the consumer. A preferred $\Delta t$ is 1 hour with preferred time period T of 1 week. However, for simplicity the Figure 7 shows only 24 bars per period $T$. Further the minima and maxima of the consumption pattern $p\{c,i\}(t)$ and the average consumption pattern $<p\{c\}(t)>$ are shown, wherein the minimum of the consumption pattern $p\{c,i\}(t)$ is $min(p\{c,i\}(t))$ and the maximum of the consumption pattern $p\{c,i\}(t)$ is $max(p\{c,i\}(t))$, and wherein the minimum of the average consumption pattern $<p\{c\}(t)>$ is $min(<p\{c\}(t)>)$ and the maximum of the average consumption pattern $<p\{c\}(t)>$ is $max(<p\{c\}(t)>)$. The example of Figure 7 shows that the trend of the consumption pattern $p\{c,i\}(t)$ follows the average consumption pattern $<p\{c\}(t)>$ with small deviations, but with one exception at $t_b - 4 \Delta t$.

In the following the basic idea and terms of the invention are formulated using mathematical formulas. It is to understand that this mathematical representation is an exemplary embodiment. The curly brackets are used for parameters, which are e.g. the label for the consumer class c and the label for the consumer $i$, whereas round brackets are used for variables, which is e.g. the time $t$.

An average consumption pattern of consumer class c can be calculated as

$$<p\{c\}(t)> = 1/N \sum_{i=1}^{N} p\{c,i\}(t).$$

$N$ is the number of consumers associated to the consumer class c, and the consumption pattern of consumer $i$ of the consumer class c is denoted by

$$p\{c,i\}(t).$$

The scaled average consumption pattern of consumer class c can be calculated as follows

$$<p\{c,i\}(t)>_{scaled} =$$

$$(p\{c,i\}(t_{max}\{c,i\}) - p\{c,i\}(t_{min}\{c,i\}))$$
$$/ (<p\{c\}(t_{max}\{c\})> - <p\{c\}(t_{min}\{c\})>) <p\{c\}(t)>$$

$$+ (p\{c,i\}( t_{min}\{c,i\}) - <p\{c\}( t_{min}\{c\})>),$$

wherein $<p\{c\}(t)>$ is maximal at $t = t_{max}\{c\}$, i.e. $<p\{c\}(t_{max}\{c\})>=max(<p\{c\}(t)>)$, and minimal at $t = t_{min}\{c\}$, i.e. $<p\{c\}(t_{min}\{c\})>=min(<p\{c\}(t)>)$, and wherein $p\{c,i\}(t)$ is maximal at $t = t_{max}\{c,i\}$, i.e. $p\{c,i\}(t_{max}\{c,i\})=max(p\{c,i\}(t))$, and minimal at, i.e. $p\{c,i\}(t_{min}\{c,i\})=min(p\{c,i\}(t))$. A corresponding example is shown in Figure 7. In order to avoid confusion, it is remarked that the scaled average consumption pattern $<p\{c,i\}(t)>_{scaled}$ depends on the consumer, since it is scaled to the consumption pattern $p\{c,i\}(t)$ of the consumer $i$, whereas the average consumption pattern $<p\{c\}(t)>$ is independent form the consumer $i$.

The difference from the average consumption pattern of said consumer class $c$ of the consumption pattern $p\{c,i\}(t)$ is then given by

$$d\{c,i\}(t) = p\{c,i\}(t) - <p\{c\}(t)>,$$

and, correspondingly, the difference from the scaled average consumption pattern of consumer class c of the pattern $p\{c,i\}(t)$ is

$$d\{c,i\}(t) = p\{c,i\}(t) - <p\{c,i\}(t)>_{scaled}.$$

The distance from the average consumption pattern for said consumer class $c$ of the consumption pattern $p\{c,i\}(t)$ indicating a suspiciousness in the time interval $[t_0; t_1=t_0+T]$ with consumption data for every time step $k$ of duration $\Delta t$ can be calculated as follows:

$$S\{c,i\} = (1/T \sum_{k=1}^{T/\Delta t} \Delta t \, |p\{c,i\}(t_0+k\,\Delta t) - <p\{c\}(t_0+k\,\Delta t)>|^{\alpha})^{\beta}$$
$$= (1/T \sum_{k=1}^{T/\Delta t} \Delta t \, |d\{c,i\}(t_0+k\,\Delta t)|^{\alpha})^{\beta},$$

and analogously, the distance from the scaled average consumption pattern for consumer class $c$ of the consumption pattern $p\{c,i\}(t)$ indicating a suspiciousness in the time interval $[t_0; t_1=t_0+T]$ with consumption for every time *step k* of duration $\Delta t$:

$$S\{c,i\} = (1/T \sum_{k=1}^{T/\Delta t} \Delta t \, |p\{c,i\}(t_0+k\,\Delta t) - <p\{c,i\}(t_0+k\,\Delta t)>_{scaled}|^{\alpha})^{\beta}$$
$$= (1/T \sum_{k=1}^{T/\Delta t} \Delta t \, |d\{c,i\}(t_0+k\,\Delta t)|^{\alpha})^{\beta}.$$

In case of using a *p*-norm: $p=\alpha=1/\beta$, wherein preferably *p=1*.

An alternatively preferred norm is the maximum norm to define $S\{c,i\}$, i.e.

$$S\{c,i\} = max_{\{k=1,\ldots,T/\Delta t\}}(|p\{c,i\}(t_0+k\,\Delta t) - <p\{c\}(t_0+k\,\Delta t)>|),$$

and analogously for using the scaled average consumption pattern,

$$S\{c,i\} = max_{\{k=1,\ldots,T/\Delta t\}}(|p\{c,i\}(t_0+k\,\Delta t) - <p\{c,i\}(t_0+k\,\Delta t)>_{scaled}|).$$

The algorithm of calculating the suspiciousness using the scaled average consumption pattern can be also called "Distance To Scaled Mean" (Disscam = Distance To Scaled Mean).

Turning back to Figure 7, two time intervals of length T are shown, wherein the first of the intervals is the time interval $[t_a; t_b]$ and the second is the time interval $[t_b; t_c]$; i.e. for applying correspondingly the equations one uses $t_0=t_b$, $K\,\Delta t= T=t_b-t_a$, and $t_0=t_c$, $K\,\Delta t= T=t_c-t_b$, respectively, $K$ being the number of measurements in the period T.

It is possible to represent the consumption patterns $p\{c,i\}(t)$ continuously. A continuous representation of the consumption patterns $p\{c,i\}(t)$ can be obtained by interpolation and/or extrapolation e.g. by using a polynomials, splines or cubic splines, or functions providing a parameterization of consumption patterns $p\{c,i\}(t)$, the suspiciousness of the average consumption pattern $<p\{c\}(t)>$ is than calculated as

$$S\{c,i\} = (1/T \int_{t\_0}^{t\_1} dt \, |p\{c,i\}(t) - <p\{c\}(t)>|^{\alpha})^{\beta}$$
$$= (1/T \int_{t\_0}^{t\_1} dt \, |d\{c,i\}(t)|^{\alpha})^{\beta},$$

wherein $t\_0 = t_0$, $t\_1 = t_1$; and analogously of the suspiciousness the scaled average consumption pattern $<p\{c,i\}(t)>_{scaled}$ is calculated as

$$S\{c,i\} = (1/T \int_{t\_0}^{t\_1} dt \, |p\{c,i\}(t) - <p\{c,i\}(t)>_{scaled}|^{\alpha})^{\beta}$$
$$= (1/T \int_{t\_0}^{t\_1} dt \, |d\{c,i\}(t)|^{\alpha})^{\beta},$$

wherein $t\_0=t_0$, $t\_1 = t_1$.

The determined suspiciousness value $S\{c,i\}$ is preferably a non-negative value.

A suspiciousness threshold value for consumer class c is denoted as

$$S\{c\}_{th.}$$

The suspiciousness threshold value $S\{c\}_{th}$ for consumer class c can be an empirically and/or constant value.

There is an alternative embodiment of calculating or determining a suspiciousness threshold value $S\{c\}_{th}$. This can be an arithmetic mean value of distances from the consumption patterns $p\{c,i\}(t)$ of each consumer and of said consumer class multiplied with a predetermined constant factor larger than 1, preferably a value selected form the interval 1.1 to 2.5: That means the suspiciousness threshold value $S\{c\}_{th}$ for consumer class $c$ can given by

$$S\{c\}_{th} = (1+\gamma)\ 1/N \sum_{i=1}^{N} S\{c,i\},$$

wherein y is a predetermined constant factor larger than 0, preferably a value selected form the interval 0.1 to 1.5, i.e. $(1+\gamma)$ is a predetermined constant factor larger than 1, preferably a value selected form the interval 1.1 to 2.5. Preferably, the average consumption pattern $<p\{c\}(t)>$ used for calculating the suspiciousness $S\{c,i\}$ for each consumer $i$ is not scaled.

**Claims**

1.  Method of determining a suspiciousness of a consumer, wherein the method comprises the steps of:

    determining a consumption pattern ($p\{c,i\}(t)$) associated with said consumer of a consumer class as a function of time; and
    calculating a distance from said consumption pattern ($p\{c,i\}(t)$) to an average consumption pattern of consumers associated with said consumer class as a function of time, the calculated distance indicating the suspiciousness of said consumer.

2.  The method according to claim 1,
    wherein the consumer is consuming one or more resources selected from the group of electrical power resources, gas resources and water resources.

3.  The method according to claim 1,
    wherein said consumption pattern ($p\{c,i\}(t)$) being extracted from a database (5) holding consumption patterns ($p\{c,i\}(t)$), each consumption pattern ($p\{c,i\}(t)$) held being associated with a consumer and with a consumer class, and wherein each consumption pattern ($p\{c,i\}(t)$) held by a database (5) being based on consumption data previously measured by one or more meters (2).

4.  The method according to claim 1,
    wherein the average consumption pattern ($<p\{c\}(t)>$) being calculated using the arithmetic mean of the consumption patterns held in a database (5) and associated with consumers associated with said consumer class.

5.  The method according to claim 1,
    wherein the distance from said consumption pattern ($p\{c,i\}(t)$) to the average consumption pattern being calculated by determining a difference from the average consumption pattern ($<p\{c\}(t)>$) by subtracting the average consumption pattern ($<p\{c\}(t)>$) from said consumption pattern ($p\{c,i\}(t)$), and determining the distance from the consumption pattern ($p\{c,i\}(t)$) to the average consumption pattern by calculating a norm along the time coordinate, preferably the $L^1$-norm or the $L^2$-norm, of the difference.

6.  The method according to claim 1,
    wherein prior calculating the distance from said consumption pattern ($p\{c,i\}(t)$) to the average consumption pattern ($<p\{c\}(t)>$), the method comprises the steps of:

    scaling the average consumption pattern ($<p\{c\}(t)>$) resulting a scaled average consumption pattern such

that the scaled average consumption pattern is a transformation of the average consumption pattern ($<p\{c\}(t)>$), preferably the transformation being a linear transformation,

that a maximum value of said consumption pattern ($max(p\{c,i\}(t))$) associated with said consumer of said consumer class equals a maximum value of the scaled average consumption pattern, and

that a minimum value of the consumption pattern ($min(p\{c,i\}(t))$) associated with said consumer of said consumer class equals a minimum value of the scaled average consumption pattern.

7. The method according to claim 6,
wherein the distance from the consumption pattern ($p\{c,i\}(t)$) to the average consumption pattern ($<p\{c\}(t)>$) being calculated by determining a difference from the scaled average consumption pattern by subtracting scaled average consumption pattern from the consumption pattern ($p\{c,i\}(t)$), and

determining the distance from the consumption pattern ($p\{c,i\}(t)$) to the average consumption pattern by calculating a norm along the time coordinate, preferably the $L^1$-norm or the $L^2$-norm, of the difference.

8. The method according to claim 1,
wherein the method comprises the steps of:

comparing the distance from the consumption pattern ($p\{c,i\}(t)$) with a predetermined suspiciousness threshold value for said consumer class,

the suspiciousness threshold value for said consumer class being preferably an empirically determined and/or constant value.

9. The method according to claim 1, wherein the method comprises the steps of:

comparing the distance from the consumption pattern ($p\{c,i\}(t)$) with an suspiciousness threshold value for said consumer class which is the arithmetic mean value of distances from the consumption patterns ($p\{c,i\}(t)$) of each consumer and of said consumer class multiplied with a predetermined constant factor larger than 1, preferably a value selected form the interval 1.1 to 2.5.

10. The method according to claim 8 or 9,
wherein, in case the comparison shows that the distance from the consumption pattern ($p\{c,i\}(t)$) is larger than the suspiciousness threshold value for said consumer class, entering to a database (5) a value indicating that the consumption pattern ($p\{c,i\}(t)$) of the customer is showing an anomaly.

11. The method according to one of the claims 8 to 10,
visualizing a value indicating the result of comparison to an operator of a utility company providing maintaining one or more meters (2) for measuring consumption data on which the consumption pattern ($p\{c,i\}(t)$) of the consumer is based.

12. The method according to one of the claims 8 to 11,
wherein, in case the comparison shows that the distance from the consumption pattern ($p\{c,i\}(t)$) is larger than the suspiciousness threshold value for said consumer class, indicating visually and/or audibly that the distance exceeds the suspiciousness threshold value.

13. An entity (6) for determining a suspiciousness of a consumer, the entity (6) comprises a control unit (62) adapted to determine a consumption pattern ($p\{c,i\}(t)$) associated with said consumer of a consumer class as a function of time, and

calculate a distance from said consumption pattern ($p\{c,i\}(t)$) to an average consumption pattern of consumers associated with said consumer class as a function of time, wherein the calculated distance indicates the suspiciousness of said consumer.

14. A computer program product storable in a memory module (63) for determining a suspiciousness of a consumer, wherein the computer program product is adapted to be executed by a control unit (62) such that the method according to claim 1 is performed.

15. A meter data management system (1) for determining a suspiciousness of a consumer, comprising meters (2) for measuring consumption data on which consumption patterns are based, a database (5) for storing the consumption patterns, and a control unit (62) adapted to determine a consumption pattern ($p\{c,i\}(t)$) associated with said consumer of a consumer class as a function of time, and
calculate a distance from said consumption pattern ($p\{c,i\}(t)$) to an average consumption pattern of consumers associated with said consumer class as a function of time, wherein the calculated distance indicates the suspiciousness of said consumer.

*Fig. 1*

Fig. 2

Fig. 3

Fig. 4

Fig. 5

Fig. 6

Fig. 7

Europäisches
Patentamt

European
Patent Office

Office européen
des brevets

# EUROPEAN SEARCH REPORT

Application Number

EP 14 29 0352

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 535 848 A1 (MORRISON ROGER [CA]) 10 August 2007 (2007-08-10) | 1-5,7, 11-15 | INV. G06F17/18 |
| Y | * Tables A-C; pages 1, 4-6 * | 6 | G01D4/00 G06Q50/06 G06K9/62 |
| | ----- | | |
| Y | Diego Hidalgo ET AL: "TRANSMISSION SYSTEM OPERATION WITH LARGE PENETRATION OF WIND AND OTHER RENEWABLE ELECTRICITY SOURCES IN NETWORKS BY MEANS OF INNOVATIVE TOOLS AND INTEGRATED ENERGY SOLUTIONS Work Package 4", <br><br> 30 September 2013 (2013-09-30), pages 1-203, XP055191453, Retrieved from the Internet: URL:http://www.twenties-project.eu/system/files/D4.3_public.pdf [retrieved on 2015-05-26] * pages 92, 180 - page 182 * | 6 | |
| | ----- | | |
| A | US 2007/247331 A1 (ANGELIS BRUCE [US] ET AL) 25 October 2007 (2007-10-25) * paragraphs [0032] - [0035]; figure 6 * | 1-15 | TECHNICAL FIELDS SEARCHED (IPC) |
| | ----- | | G06F |
| X | US 2011/295783 A1 (ZHAO YING [US] ET AL) 1 December 2011 (2011-12-01) | 1,3-5, 7-15 | G01D G06Q G06K |
| A | * abstract * | 2,6 | |
| | ----- | | |
| A | US 2013/124436 A1 (CARDENAS MORA ALVARO A [US] ET AL) 16 May 2013 (2013-05-16) * abstract * * paragraph [0031] - paragraph [0039] * | 1-15 | |
| | ----- | | |

The present search report has been drawn up for all claims

| Place of search | Date of completion of the search | Examiner |
|---|---|---|
| Berlin | 26 May 2015 | Virnik, Elena |

EPO FORM 1503 03.82 (P04C01)

## ANNEX TO THE EUROPEAN SEARCH REPORT
## ON EUROPEAN PATENT APPLICATION NO.

EP 14 29 0352

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2015

| Patent document cited in search report | | Publication date | Patent family member(s) | | Publication date |
|---|---|---|---|---|---|
| CA 2535848 | A1 | 10-08-2007 | CA | 2535848 A1 | 10-08-2007 |
| | | | US | 2007200553 A1 | 30-08-2007 |
| US 2007247331 | A1 | 25-10-2007 | CA | 2583057 A1 | 30-09-2007 |
| | | | US | 2007247331 A1 | 25-10-2007 |
| US 2011295783 | A1 | 01-12-2011 | NONE | | |
| US 2013124436 | A1 | 16-05-2013 | JP | 2013105497 A | 30-05-2013 |
| | | | US | 2013124436 A1 | 16-05-2013 |

EPO FORM P0459

For more details about this annex : see Official Journal of the European Patent Office, No. 12/82